# EUROPÄISCHE PATENTSCHRIFT

(11) **EP 0 850 807 B1**
(45) Veröffentlichungstag und Bekanntmachung des Hinweises auf die Patenterteilung: **07.05.2003**
(21) Anmeldenummer: 97122823.4
(22) Anmeldetag: 23.12.1997
(51) Int. Cl.: B60R 19/34, F16F 7/12, B60R 19/40

(54) **Stossverzehrvorrichtung für ein Kraftfahrzeug**
Energy absorbing device for a motor vehicle
Dispositif d'absorption d'énergie pour véhicule automobile

(30) Priorität: 27.12.1996 DE 19654559
(43) Veröffentlichungstag der Anmeldung: 01.07.1998
(73) Patentinhaber: Euromotive Gesellschaft m.b.H., 5282 Ranshofen (AT)
(72) Erfinder: Garnweidner, Peter, 5112 Lamprechtshausen 429a (AT)
(74) Vertreter: WILHELMS, KILIAN & PARTNER Patentanwälte

(56) Entgegenhaltungen:
- DE-A- 4 238 631
- DE-U- 29 606 069
- US-A- 3 482 653
- US-A- 3 751 092

## Beschreibung

Die Erfindung betrifft eine Stoßverzehrvorrichtung für ein Kraftfahrzeug gemäss den Merkmalen im Oberbegriff von Anspruch 1 mit einem Stoßenergie absorbierenden Bauteil, auf das Stoßenergie von einem Stoßfänger des Kraftfahrzeuges übertragen wird.

Eine derartige Vorrichtung dient dazu, die bei einem Aufprall eines Kraftfahrzeuges auf ein Hindernis auftretende Stoßenergie zu absorbieren, damit diese nicht auf den hinter der Stoßverzehrvorrichtung angeordneten Fahrzeugaufbau übertragen werden.

Aus der EP 0 364 432 A1 sowie der DE 42 38 631 A1 sind Stoßverzehrvorrichtungen bekannt, bei denen das die Stoßenergie absorbierende Bauteil aus einem Reduzierrohr besteht, das mit dem fahrzeugseitigen Endabschnitt in einem Reduzierring sitzt, der einen Innendurchmesser hat, der kleiner als der Außendurchmesser des restlichen Abschnitts des Reduzierrohres ist. Die von einem Stoßfänger des Kraftfahrzeuges bei einem Aufprall aufgenommene Stoßenergie liegt am Reduzierrohr und wird durch dieses dadurch absorbiert, daß es durch den Reduzierring hindurchgetrieben und dabei verformt wird.

Die bei einer derartigen bekannten Stoßverzehrvorrichtung maximal aufnehmbare Stoßenergie entspricht der maximalen Verformungsarbeit, die gleich dem Integral der Kraft über den zur Verfügung stehenden Verformungsweg ist. Dieser Verformungsweg ist bei bekannten Stoßverzehrvorrichtungen der maximale Arbeitshub des Stoßenergie absorbierenden Bauteils, der durch den Bauraum im Kraftfahrzeug vorgegeben ist und etwa dem Abstand zwischen dem Stoßfängerträger und dem Längsträger des Kraftfahrzeuges entspricht.

Im Idealfall sollte die maximal mögliche Verformungsarbeit, die das Stoßenergie absorbierende Bauteil ohne Längsträgerschaden leisten kann, größer als die kinetische Engergie des Fahrzeuges bei einem Aufprall sein. In Abhängigkeit vom vorgegebenen Fahrzeugdesign ist jedoch der Abstand zwischen dem Stoßfängerträger und dem Längsträger häufig zu klein, um diese Verformungsarbeit leisten zu können, was dazu führt, daß bei einem Aufprall ein Längsträgerschaden auftritt, der hohe Reparaturkosten hervorruft.

Die der Erfindung zugrundeliegende Aufgabe besteht daher darin, eine Stoßverzehrvorrichtung für ein Kraftfahrzeug zu schaffen, deren Stoßenergieaufnahmekapazität von den baulichen Vorgaben des Kraftfahrzeuges unabhängig ist.

Diese Aufgabe wird gemäß der Erfindung durch die Ausbildung gelöst, die im Kennzeichen des Patentanspruchs 1 angegeben ist.

Bei der erfindungsgemäßen Ausbildung ist das die Stoßenergie absorbierende Bauteil im Normalfall in der Ausgangsposition angeordnet, in der es im wesentlichen im Längsträger des Kraftfahrzeuges aufgenommen ist. Konstruktion und Design des Fahrzeuges werden hierdurch nicht beeinträchtigt. Im Fall eines bevorstehenden Unfalls wird automatisch das Stoßenergie absorbierende Bauteil in eine Arbeitsposition, z.B. in eine vom Fahrzeug vorstehende Position getrieben, in der die volle Stoßenergieaufnahmekapazität zur Verfügung steht. Beispielsweise kann im Falle der Ausbildung des Stoßenergie absorbierenden Bauteils als Reduzierrohr diese Position so gewählt sein, daß der beim Anliegen eines Stoßes zur Verfügung stehende Verformungsweg eine maximale Verformungsarbeit gewährleistet, die die kinetische Energie des Fahrzeuges übersteigt.

Besonders bevorzugte Ausgestaltungen und Weiterbildungen der erfindungsgemäßen Vorrichtung sind Gegenstand der Patentansprüche 2 bis 6.

Im folgenden werden anhand der zugehörigen Zeichnung besonders bevorzugte Ausführungsbeispiele der Erfindung näher beschrieben. Es zeigen
Fig. 1 eine Längsschnittansicht eines ersten Ausführungsbeispiels der erfindungsgemäßen Stoßverzehrvorrichtung in der Ausgangsposition,

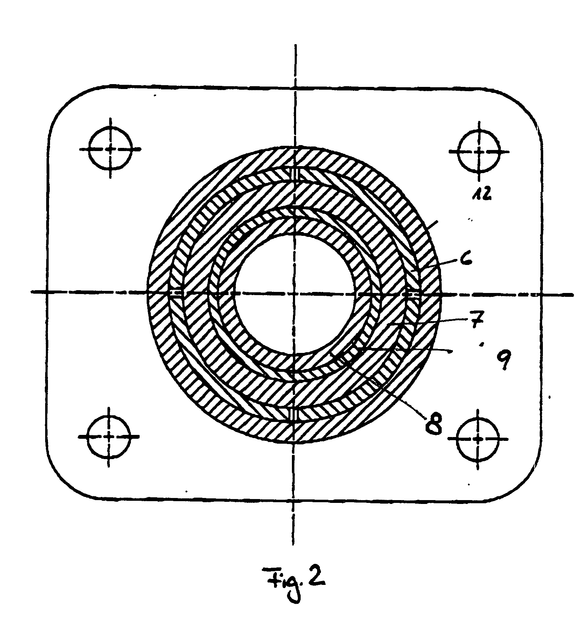

Fig. 2 eine Schnittansicht des in Fig. 1 dargestellten Ausführungsbeispiels längs der Linie A-A in Fig. 1,
Fig. 3 eine Längsschnittansicht der in Fig. 1 dargestellten Vorrichtung in der vorstehenden Position,
Fig. 4 eine Längsschnittansicht der in Fig. 1 dargestellten Vorrichtung nach maximaler Aufnahme von Stoßenergie,
Fig. 5 eine Längsschnittansicht eines zweiten Ausführungsbeispiels der erfindungsgemäßen Vorrichtung in der Ausgangsposition,
Fig. 6 eine Längsschnittansicht des in Fig. 5 dargestellten Ausführungsbeispiels in der vorstehenden Position, und
Fig. 7 eine Längschnittansicht des in Fig. 5 dargestellten Ausführungsbeispiels nach maximaler Stoßenergieabsorption.

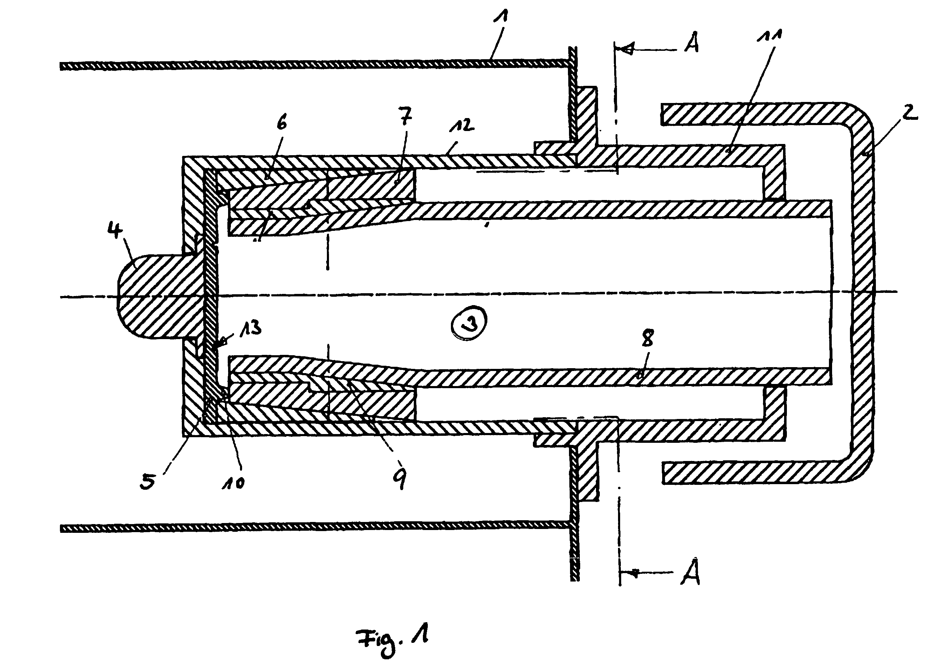

Das in Fig. 1 dargestellte Ausführungsbeispiel einer Stoßverzehrvorrichtung für ein Kraftfahrzeug ist im Längsträger 1 des Kraftfahrzeuges angeordnet und weist ein Stoßenergie absorbierendes Bauteil in Form eines Reduzierrohres 8 auf, das mit seinem fahrzeugseitigen Endabschnitt in einem Reduzierring 7 sitzt, dessen Innendurchmesser kleiner als der Außendurchmesser des restlichen Teils des Reduzierrohres 8 ist. Zwischen dem Reduzierring 7 und dem Reduzierrohr 8 ist eine Gleithülse 9 angebracht, und an der Außenseite des Reduzierringes 7 sitzen Keile 6, deren Funktion später beschrieben wird. Das Reduzierrohr 8 ist an dem fahrzeugseitigen Ende von einem Boden in Form eines Deckels 5 verschlossen und mit seinem gegenüberliegenden Ende an der Rückseite eines Stoßfängers 2 des Kraftfahrzeuges angeordnet, so daß bei einem Aufprall des Kraftfahrzeuges die am Stoßfänger 2 liegende Stoßenergie auf das Reduzierrohr 8 übertragen wird. Auf der vom Reduzierrohr 8 abgewandten Seite des Bodens 5 befindet sich eine auslösbare Treibeinrichtung, vorzugsweise mit einem pyrotechnischen Zünder, wie sie bei einem üblichen Airbagsystem eines Kraftfahrzeuges vorgesehen ist. Die kolbenartige Anordnung aus Treibeinrichtung 4 und Reduzierrohr 8 mit den Keilen 6, dem Reduzierring 7, der Gleithülse 9 und dem Boden 5 ist in einem äußeren Zylinder 12 angeordnet, der im Längsträger 1 des Fahrzeuges sitzt und durch einen Außenring 11 nach außen verlängert ist, der eine Öffnung aufweist, durch die das Reduzierrohr 8 gleitend verschiebbar vorsteht.

Die Treibeinrichtung 4 ist mit dem Bordcomputer des Kraftfahrzeuges verbunden, der die Ausgangssignale von Näherungssensoren auswerten kann und aufgrund der Fahrsituation, der Geschwindigkeit, des Abstandes zu anderen Gegenständen beurteilen kann, ob ein Aufprall des Fahrzeuges zu erwarten ist. Wenn der Bordcomputer feststellt, daß ein Aufprall, beispielsweise ein Unfall bevorsteht, legt er ein elektronisches Signal an die Treibeinrichtung 4, durch das diese gezündet wird.

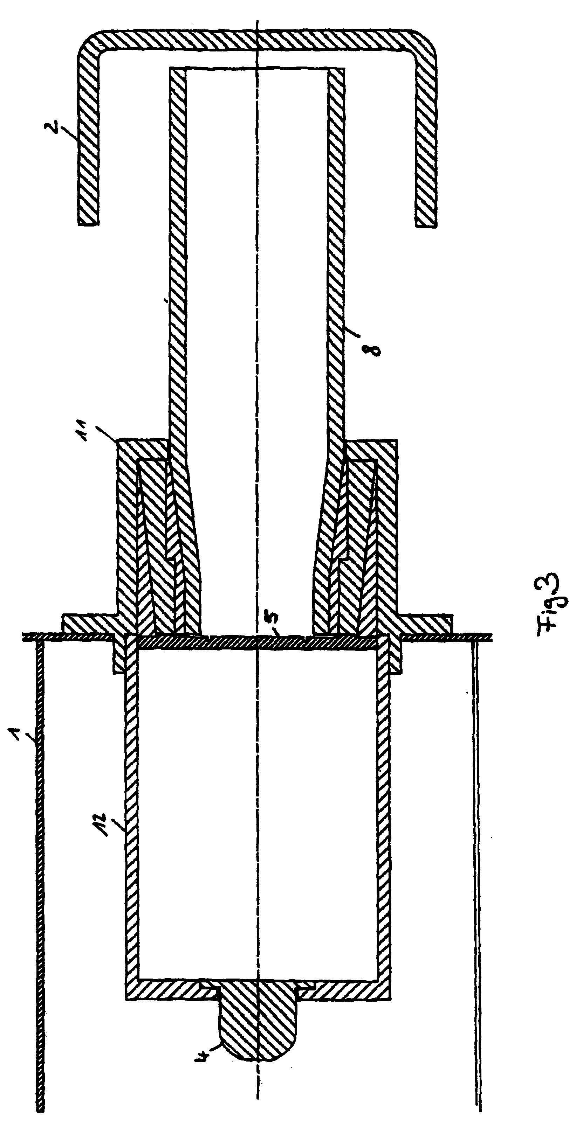

Durch die Zündung der Treibeinrichtung 4 wird Druckgas entwickelt, das auf den Boden 5 des Reduzierrohres 8 einwirkt und diesen zusammen mit dem Reduzierrohr 8 durch die Öffnung im Außenring 11 nach vorne in eine vom Fahrzeug vorstehende Position treibt, die in Fig. 3 dargestellt ist. Zusammen mit dem Reduzierrohr 8 wird auch der Stoßfänger 2 nach vorne getrieben.

Das Reduzierrohr 8 wird soweit nach vorne getrieben, bis der Reduzierring 7 an der Innenfläche der Stirnseite des Außenringes 11 anschlägt.

Bei dem in Fig. 1 dargestellten Ausführungsbeispiel sind Vorsprünge oder Abstandshalter 10 auf der Seite des Reduzierrohres 8 am Boden 5 vorgesehen. Beim Aufprall des Reduzierringes 7 am Außenring 11 werden diese Vorsprünge 10 durch die aus dem Gasdruck resultierende Kraft verformt, woraufhin der Boden 5 die Keile 6 zwischen der Gleithülse 9 und dem Reduzierring 7 einerseits und dem Außenring 11 andererseits eindrückt. In dieser Weise wird die Anordnung in der in Fig. 3 dargestellten, vom Fahrzeug vorgeschobenen Position festgestellt.

Wenn der Gasdruck im Inneren des Zylinders 12 anschließend weiter ansteigt, wird eine am Boden 5 vorgesehene Sollbruchstelle 13 geöffnet, über die das Gas entweichen kann.

Die Anordnung befindet sich dann in dem Zustand, in dem eine maximale Stoßenergie aufgenommen werden kann. Bei einem Aufprall wird die Stoßenergie vom Stoßfänger 2 auf das Reduzierrohr 8 übertragen, wodurch dieses durch den Reduzierring 7 in Längsrichtung des Längsträgers 1 hindurchgepreßt wird. Bei Aufprallgeschwindigkeiten bis 4 km/h tritt eine elastische Verformung und bei höheren Aufprallgeschwindigkeiten eine plastische Verformung auf. Die dabei geleistete Verformungsarbeit am Reduzierrohr 8 entspricht der aufgenommenen Stoßenergie. Wenn die Länge des Reduzierrohres und seine vorgeschobene Position entsprechend gewählt sind, kann der Verformungsweg problemlos so gewählt werden, daß die maximal absorbierende Stoßenergie größer als die kinetische Energie des Fahrzeuges ist, wodurch eine Verformung des Längsträgers 1 des Fahrzeuges, auch bei einem Aufprall bei hoher Geschwindigkeit vermieden werden kann.

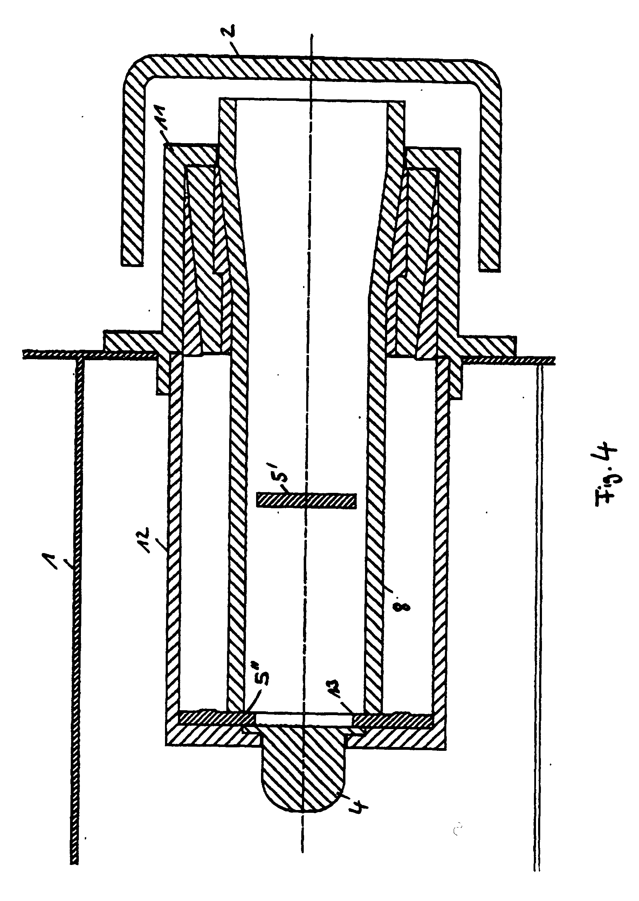

Fig. 4 zeigt die Stoßverzehrvorrichtung nach einem Fahrzeugaufprall in dem Zustand, in dem die maximale Stoßenergie absorbiert worden ist, d.h. in dem der maximale Verformungsweg ausgenutzt wurde. In Fig. 4 sind die nach Brechen der Sollbruchstelle 13 übrigbleibenden Teile des Bodens 5' und 5'' dargestellt. Das Reduzierrohr 8 ist nahezu über seine gesamte Länge auf den reduzierten Innendurchmesser des Reduzierringes 7 verformt.

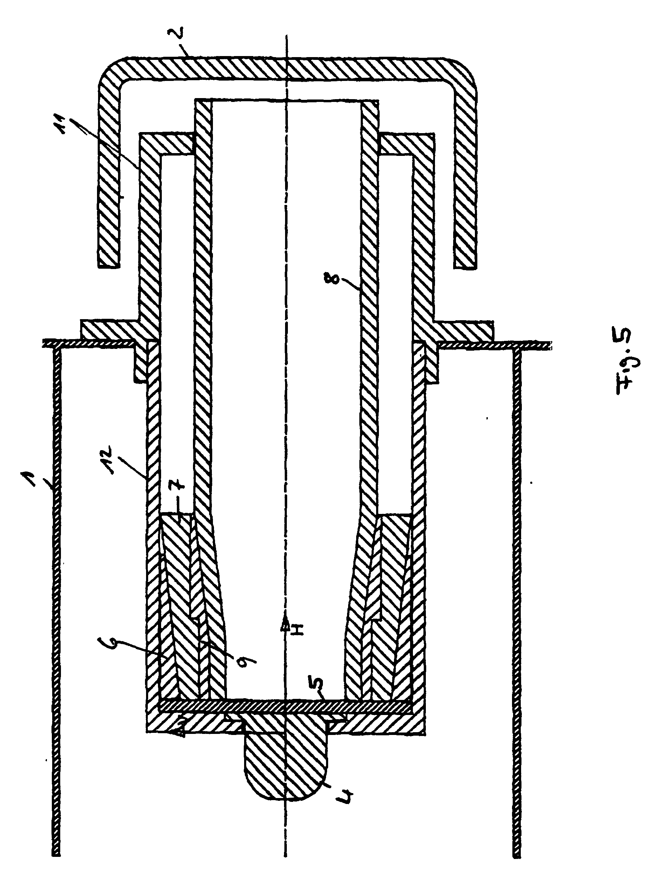

Bei dem in Fig. 5 dargestellten zweiten Ausführungsbeispiel der Erfindung fehlen die Vorsprünge 10 des ersten Ausführungsbeispiels am Boden 5. Im übrigen hat das zweite Ausführungsbeispiel den gleichen Aufbau wie das erste Ausführungsbeispiel.

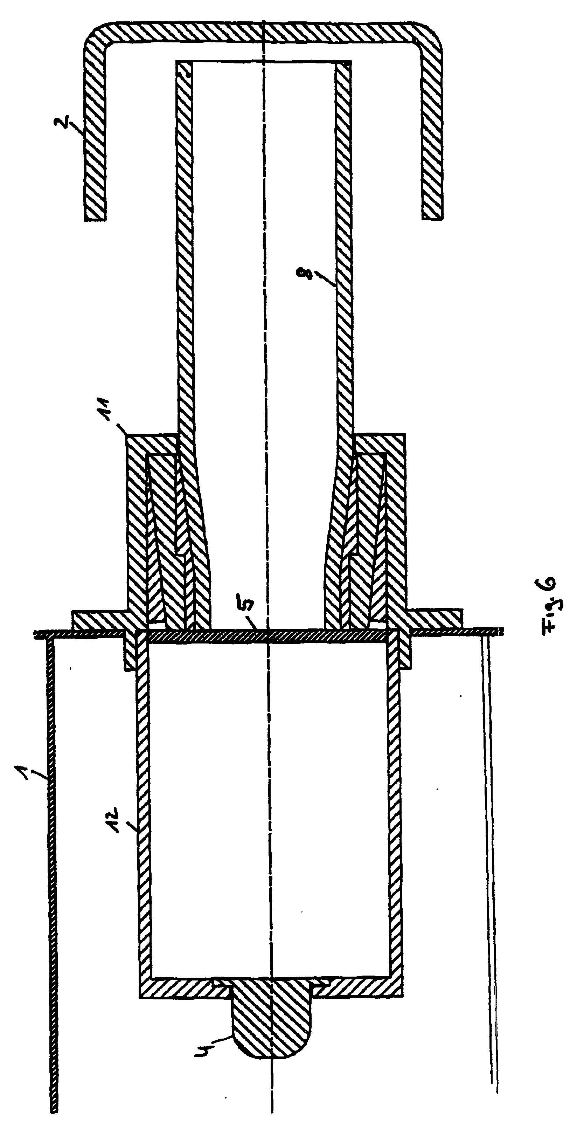

Das zweite Ausführungsbeispiel unterscheidet sich gemäß Fig. 6 dadurch, daß die Feststellung des Reduzierrohres 8 und des Reduzierringes 7 in der vorstehenden Position, die in Fig. 6 dargestellt ist, dadurch bewirkt wird, daß die Keile 6 durch ihre Massenträgheit zwischen den Reduzierring 7 und den Außenring 11 rutschen und sich dort verklemmen. Der Keilflächenwinkel ist dabei selbsthemmend ausgeführt.

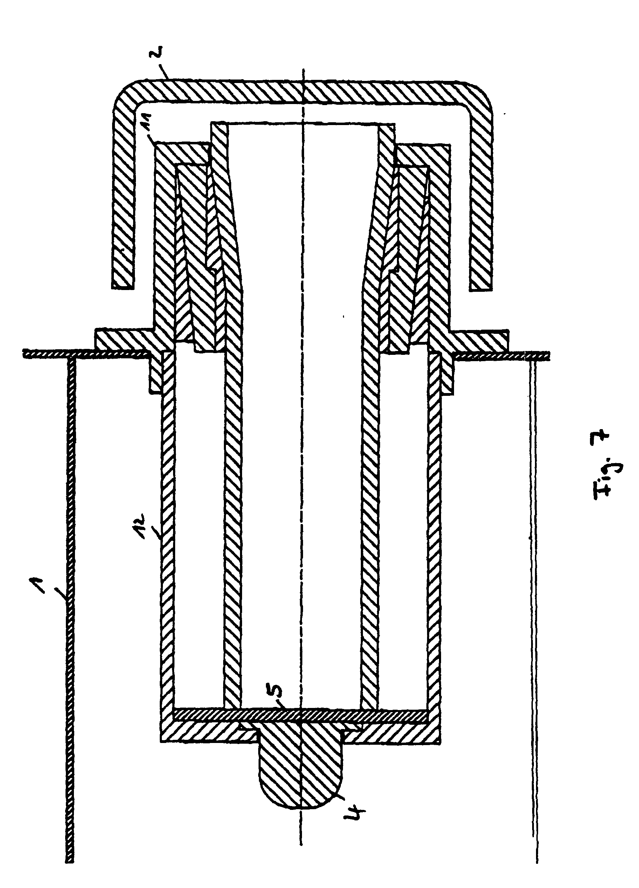

Fig. 7 zeigt das zweite Ausführungsbeispiel im Zustand der Absorption maximaler Stoßenergie, in dem das Reduzierrohr 8 zusammen mit dem Boden 5 wieder vollständig in den Zylinder 12 zurückgeschoben ist und auf nahezu seiner gesamten Länge durch den Reduzierring 7 auf dessen Innendurchmesser reduziert ist.

Im obigen wurden zwei Ausführungbeispiele beschrieben, bei denen das die Stoßenergie absorbierende Bauteil ein Reduzierrohr ist, das in einem Reduzierring sitzt und durch entsprechende Verformung Stoßenergie absorbiert. Das Stoßenergie absorbierende Bauteil muß aber nicht unbedingt ein Reduzierrohr sein, es kann irgendein beliebiges energieverzehrendes Bauteil sein.

## Patentansprüche

1. Stoßverzehrvorrichtung für ein Kraftfahrzeug mit einem Stoßenergie absorbierenden Bauteil, auf das Stoßenergie von einem Stoßfänger des Kraftfahrzeugs übertragen wird und das in Längsrichtung des Kraftfahrzeuges aus einer Ausgangsposition, in der es im wesentlichen in einem Fahrzeuglängsträger (1) aufgenommen ist, in eine Arbeitsposition bewegbar und in dieser Arbeitsposition feststellbar ist, in der die volle Stoßenergieaufnahmekapazität des Stoßenergie absorbierenden Bauteils (7, 8) verfügbar ist, und mit einer Treibeinrichtung (4), die durch ein Auslösesignal von einer Aufprallüberwachungseinrichtung des Kraftfahrzeuges gezündet wird und das Stoßenergie absorbierende Bauteil (7, 8) aus der Ausgangsposition in die Arbeitsposition treibt, **dadurch gekennzeichnet, dass** an der Außenseite des Stoßenergie absorbierenden Bauteils (7, 8) Längskeile (6) vorgesehen sind, die das Stoßenergie absorbierende Bauteil (7, 8) in der Arbeitsposition fest verkeilen.

2. Vorrichtung nach Anspruch 1, **dadurch gekennzeichnet, dass** das Stoßenergie absorbierende Bauteil (7, 8) aus einem in einem Zylinder (11, 12) angeordneten und davon vorstehenden Kolben besteht, der in Form eines verformbaren Reduzierrohres (8) ausgebildet ist, das an der Fahrzeugseite durch einen Boden (5) geschlossen ist und mit seinem fahrzeugseitigen Ende in einem Reduzierring (7) sitzt, dessen Innendurchmesser kleiner als der Außendurchmesser des Restes des Reduzierrohres (8) ist, wobei die Treibeinrichtung (4) ihr Druckgas im Raum zwischen dem Zylinder (11, 12) und dem Boden (5) entwickelt, mit dem das Reduzierrohr (8) abgeschlossen ist.

3. Stoßverzehrvorrichtung nach Anspruch 2, **gekennzeichnet durch** eine Gleithülse (9), die zwischen dem Reduzierring (7) und dem Reduzierrohr (8) angeordnet ist.

4. Vorrichtung nach Anspruch 2, **dadurch gekennzeichnet, dass** der Boden (5) des Reduzierrohres (8) mit einer Sollbruchstelle (13) im Bereich der Innenwand des Reduzierrohres (8) versehen ist.

5. Vorrichtung nach Anspruch 2, **dadurch gekennzeichnet, dass** der Boden (5) des Reduzierrohres (8) mit Vorsprüngen (10) ausgebildet ist, an denen der Reduzierring (7) anliegt.

6. Vorrichtung nach einem der Ansprüche 1 bis 5, **dadurch gekennzeichnet, dass** die Treibeinrichtung (4) eine pyrotechnisch gezündete, ein Druckgas entwickelnde Einrichtung ist.

## Claims

1. An impact-absorbing device for a motor vehicle, comprising a component which absorbs impact energy and to which impact energy is transmitted from a bumper of the motor vehicle, and which can move in the longitudinal direction of the motor vehicle from an initial position, in which it is substantially absorbed in a vehicle longitudinal beam (1), into an operating position, and can be fixed in said operating position, in which the full impact energy absorption capacity of the component (7, 8) which absorbs impact energy is available, and comprising a driving device (4), which is set off by a triggering signal from an impact monitoring device of the motor vehicle and which drives the component (7, 8) which absorbs impact energy from the initial position into the operating position, **characterised in that** longitudinal wedges (6), which fixedly wedge the component (7, 8) which absorbs impact energy in the operating position, are provided on the outside of the component (7, 8) which absorbs impact energy.

2. A device according to claim 1, **characterised in that** the component (7, 8) which absorbs impact energy consists of a piston which is disposed in a cylinder (11, 12) and which protrudes therefrom, and which is constructed in the form of a deformable reducing tube (8) which is closed by a base (5) on the vehicle side and the vehicle-side end of which is seated in a reducing ring (7), the inside diameter of which is smaller than the outside diameter of the rest of the reducing tube (8), wherein the driving device (4) generates its compressed gas in the space between the cylinder (11, 12) and the base (5) by which the reducing tube (8) is closed.

3. A device according to claim 2, **characterised by** a sliding bush (9) which is disposed between the reducing ring (7) and the reducing tube (8).

4. A device according to claim 2, **characterised in that** the base (5) of the reducing tube (8) is provided with a break-off point (13) in the region of the inner wall of the reducing tube (8).

5. A device according to claim 2, **characterised in that** the base (5) of the reducing tube (8) is formed with projections (10) against which the reducing; ring (7)) is seated.

6. A device according to any one of claims 1 to 5, **characterised in that** the driving device (4) is a pyrotechnically activated device which generates a compressed gas.

## Revendications

1. Dispositif d'absorbtion d'énergie d'impact pour un véhicule à moteur comprenant un composant absorbant l'énergie d'impact, auquel est transmise l'énergie d'impact d'un pare-choc du véhicule à moteur, qui peut être déplacé dans la direction longitudinale du véhicule à moteur depuis une position de départ, dans laquelle il est logé sensiblement dans un longeron (1) du véhicule, à une position de travail et peut être fixé dans cette position de travail, dans laquelle est disponible toute la capacité d'absorbtion d'énergie d'impact du composant (7, 8) absorbant l'énergie d'impact, et comprenant un dispositif moteur (4), qui est amorcé par un signal de déclenchement provenant d'un dispositif de contrôle d'impact du véhicule à moteur et entraîne le composant (7, 8) absorbant l'énergie d'impact de la position de départ dans la position de travail, **caractérisé en ce qu'**il est prévu à l'extérieur du composant (7, 8) absorbant l'énergie d'impact des cales longitudinales (6), qui calent solidement le composant (7, 8) absorbant l'énergie d'impact dans la position de travail.

2. Dispositif selon la revendication 1, **caractérisé en ce que** le composant (7, 8) absorbant l'énergie d'impact est constitué d'un piston agencé dans un cylindre (11, 12) et qui en fait saillie, se présentant sous la forme d'un tube de réduction déformable (8), qui est fermé du côté véhicule par un fond (5) et s'appuie par son extrémité côté véhicule sur une bague de réduction (7) dont le diamètre interne est plus petit que le diamètre externe du restant du tube de réduction (8), le dispositif moteur (4) dégageant son gaz sous pression dans l'espace compris entre le cylindre (11, 12) et le fond (5), avec lequel le tube de réduction (8) est fermé.

3. Dispositif de dissipation d'énergie d'impact selon la revendication 2, **caractérisé par** une douille coulissante (9) qui est agencée entre la bague de réduction (7) et le tube de réduction (8).

4. Dispositif selon la revendication 2, **caractérisé en ce que** le fond (5) du tube de réduction (8) est pourvu d'un point de rupture théorique (13) dans la zone de la paroi interne du tube de réduction (8).

5. Dispositif selon la revendication 2, **caractérisé en ce que** le fond (5) du tube de réduction (8) présente des saillies (10), sur lesquelles s'applique la bague de réduction (7).

6. Dispositif selon l'une quelconque des revendications 1 à 5, **caractérisé en ce que** le dispositif moteur (4) est un dispositif amorcé par voie pyrotechnique et dégageant un gaz sous pression.
